# EUROPEAN PATENT APPLICATION

(11) **EP 1 809 009 A2**
(43) Date of publication of application: **18.07.2007**
(21) Application number: 07100617.5
(22) Date of filing: 16.01.2007
(51) Int. Cl.: H04M 1/725, H04M 1/02

(54) **Method for continuing a message transmission upon closing a wireless terminal**

(30) Priority: 17.01.2006 KR 20060004944
(71) Applicant: Samsung Electronics Co., Ltd., Suwon-si, Gyeonggi-Do (KR)
(72) Inventor: Kim, Su-Yean, Yeongtong-gu, Suwon-si, Gyeonggi-do (KR); Rhee, Jong-Hun, Yeongtong-gu, Suwon-si Gyeonggi-do (KR)
(74) Representative: Zimmer, Franz-Josef

(57) **Abstract**

Disclosed is a method for transmitting a message in a wireless terminal, the method including if transmission of a message created in a message mode of the wireless terminal is selected, performing the message transmission; and if a closing operation of the wireless terminal is performed during the message transmission, continuing the message transmission in a state where the wireless terminal has been closed.

## Description

The present invention relates generally to a method for transmitting a message in a wireless terminal, and in particular, to a method for transmitting a message in a wireless terminal, in which, even when a closing operation of the wireless terminal is performed during message transmission, the message transmission is continued. The present invention also relates to a corresponding wireless terminal.

Generally, after a message to be transmitted is generated in a wireless terminal, if a message transmission key is input in order to transmit the generated message, transmission (message transmission) of the message is performed. However, if a closing operation of the wireless terminal is performed before completion of the message transmission, e.g., if a folder is closed in a folder-type wireless terminal, if a flip is closed in a flip-type wireless terminal, or if a slide is closed in a slide-type wireless terminal, the message transmission will directly terminate.

As a result, the user of the wireless terminal must again create a message and transmit the message. Further, the user must wait for several seconds to several tens of seconds, until the message transmission is completed, before performing the closing operation of the wireless terminal which does not enhance user's convenience.

Accordingly, the present invention has been made to solve the above-mentioned problems occurring in the conventional art. It is the object of the present invention to provide a method and a wireless terminal for transmitting a message in the wireless terminal even when a closing operation of the wireless terminal is performed during message transmission.

This object is solved by the subject matter of the independent claims.

Preferred embodiments are defined in the dependent claims.

In accordance with an aspect of the present invention, there is provided a method for transmitting a message in a wireless terminal, the method including if transmission (message transmission) of a message created in a message mode of the wireless terminal is selected, performing the message transmission; and if a closing operation of the wireless terminal is performed during the message transmission, continuing the message transmission in a state where the wireless terminal has been closed.

In accordance with another aspect of the present invention, there is provided a method for transmitting a message in a wireless terminal, the method including if transmission (message transmission) of a message created in a message mode of the wireless terminal is selected, performing the message transmission; if a closing operation of the wireless terminal is performed during the message transmission, determining if message transmission maintenance has been set in a state where the wireless terminal has been closed; if the message transmission maintenance has been set, continuing the message transmission in the state where the wireless terminal has been closed; and if the message transmission is completed, reporting success or failure of the message transmission in the state where the wireless terminal has been closed.

In accordance with further another aspect of the present invention, there is provided a method for transmitting a message in a wireless terminal, the method including if transmission (message transmission) of a message created in a message mode of the wireless terminal is selected, performing the message transmission; if a closing operation of the wireless terminal is performed during the message transmission, displaying a message representing whether the message transmission is to be continued or terminated; if the message transmission is selected before a predetermined time passes, continuing the message transmission in a state where the wireless terminal has been closed; and if the message transmission is completed, reporting an outcome (i.e., success or failure) of the message transmission in the state where the wireless terminal has been closed.

The present invention will be more apparent from the following detailed description taken in conjunction with the accompanying drawings, in which:
FIG. 1 is a block diagram illustrating the construction of a wireless terminal according to the present invention;
FIG. 2 is a flow diagram illustrating a message transmission process in the wireless terminal according to a first embodiment of the present invention; and
FIG. 3 is a flow diagram illustrating a message transmission process in the wireless terminal according to a second embodiment of the present invention.

Preferred embodiments of the present invention will be described in detail herein below with reference to the accompanying drawings. It should be noted that the same reference numerals are used to designate the same elements as those shown in other drawings. In the following description, well-known functions or constructions are not described in detail since they would obscure the invention in unnecessary detail.

According to the present invention, a closing operation of a wireless terminal represents an operation in which an ongoing transmission (message transmission) of a message in the wireless terminal is interrupted due to the closing of a folder in a folder-type wireless terminal, a flip in a flip-type wireless terminal, or a slide in a slide-type) wireless terminal.

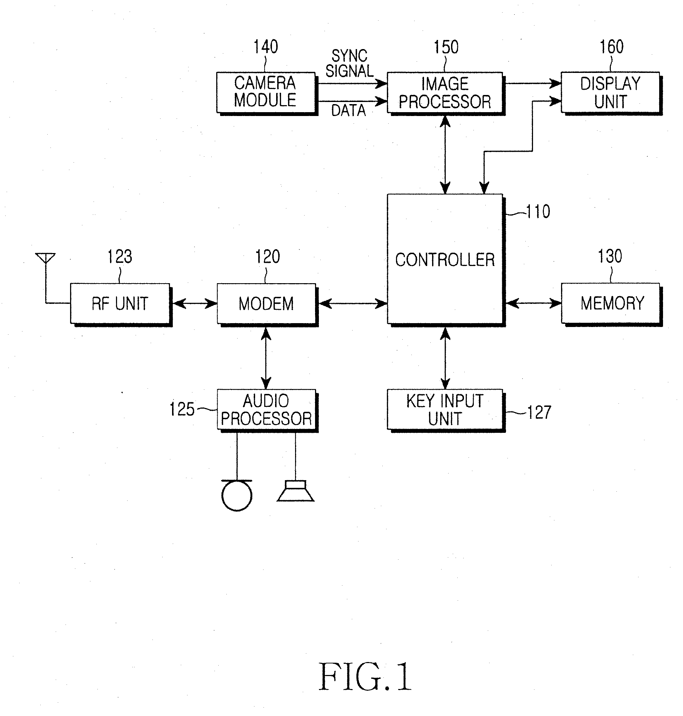

FIG. 1 is a block diagram illustrating the construction of a wireless terminal according to the present invention.

Referring to FIG. 1, a Radio Frequency (RF) unit 123 performs a wireless communication function communication of the wireless terminal The RF unit 123 includes an RF transmitter (not shown) for up-converting and amplifying the frequency of transmitted signals, and an RF receiver (not shown) for low-noise amplifying received signals and down-converting the frequency of the received signals. A modem 120 includes, but is not limited to, a transmitter (not shown) for coding and modulating the transmitted signals, and a receiver (not shown) for demodulating and decoding the received signals. An audio processor 125 can include a coder/decoder (codec). The codec includes a data codec (not shown) for processing packet data, etc., and an audio codec (not shown) for processing audio signals such as voice. The audio processor 125 converts digital audio signals received through the modem 120 into analog signals through the audio codec for reproduction, or converts analog audio signals generated from a microphone into digital audio signals through the audio codec and transmits the digital audio signals to the modem 120. The codec can be separately provided or included in a controller 110.

A memory 130 can include a program memory and a data memory. The program memory may store programs for controlling general operations of the wireless terminal, and control programs for continuing message transmission even when a closing operation of the wireless terminal is performed in the wireless terminal according to the present invention. The data memory temporarily stores data generated during the execution of the programs.

The controller 110 performs a function of controlling the general operations of the wireless terminal, which can also include the modem 120 and the codec.

According to the present invention, if the wireless terminal is closed while performing message transmission, the controller 110 either continues or terminates the message transmission according to message transmission maintenance setup in the closing operation of the wireless terminal.

According to the present invention, if the wireless terminal is closed while performing message transmission,_the controller 110 displays a message, which represents whether the message transmission is to be continued or terminated, on an external display unit. If transmission is selected before a predetermined time passes, the controller 110 continues the message transmission. However, the controller 110 terminates the message transmission, if transmission cancellation is selected before passage of the predetermined time or after passage of the predetermined time .

According to the present invention, if the message transmission is completed in a state in which the closing operation of the wireless terminal has been performed, the controller 110 controls the outcome (i.e., success or failure) of the message transmission to be reported through the number of vibrations, the type of ringing sound, the operation of a lamp, etc.

A camera module 140 includes a camera sensor (not shown) for photographing image data and converting photographed optical signals into electric signals, and a signal processor (not shown) for converting analog image signals photographed by the camera sensor into digital data. It is assumed that the camera sensor is a Charge-Coupled Device (CCD) sensor. The signal processor may be realized by a Digital Signal Processor (DSP). Further, the camera sensor can be integrated with the signal processor, or can otherwise be constructed separately from the signal processor.

An image processor 150 generates screen data for displaying image signals output from the camera module 140. The image processor 150 processes the image signals, which are output from the camera module 140, by the frame, and outputs the frame image data according to the characteristics and sizes of a display unit 160. The image processor 150 includes an image codec, compresses the frame image data, which is displayed on the display unit 160, by a predetermined scheme, or restores the compressed frame image data into the original frame image data. The image codec can include a Joint Photographic Experts Group (JPEG) codec, a Motion Pictures Expert Group (MPEG) 4 codec, a wavelet codec, etc. It is assumable, the image processor 150 has an On Screen Display (OSD) function, which can output on screen display data according to displayed screen sizes under the control of the controller 110.

The display unit 160 displays the image signals output from the image processor 150 on a screen, and displays user data output from the controller 110. The display unit 160 may use a Liquid Crystal Display (LCD). In this case, the display unit 160 can include, but is not limited to, an LCD controller, and a memory (not shown) capable of storing image data, and an LCD display device. When the LCD has a touch screen function, the display unit 160 may also operate as an input unit. The display unit 160 may include an internal display unit and an external display unit. The internal display unit and the external display unit can be respectively provided on the inner side and the outer side of a folder in a fold-type wireless terminal.

A key input unit 127 includes keys for inputting numeral and character information as well as function keys for setting various functions. Further, the key input unit 127 can have keys for controlling message transmission in a state in which the closing operation of the wireless terminal has been performed according to the present invention.

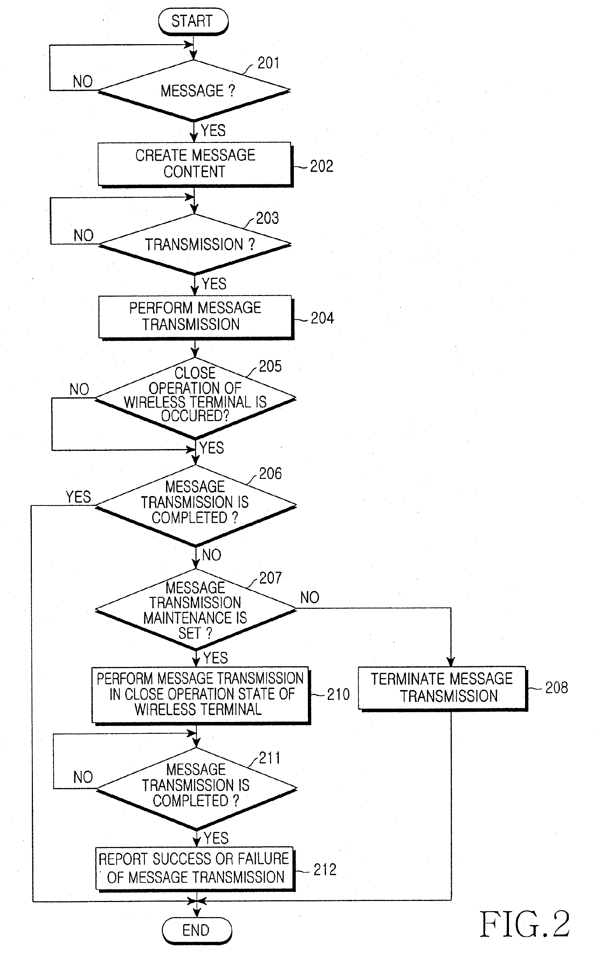

Hereinafter, a message transmission process in the wireless terminal as described above will be described in detail with reference to FIGs. 2 to 3.

FIG. 2 is a flow diagram illustrating a message transmission process in the wireless terminal according to a first embodiment of the present invention.

Hereinafter, the present invention will be described in detail with reference to FIG. 1.

Referring to FIG. 2, if a message is selected in the wireless terminal, the controller 110 detects the selection of the message in step 201 and switches the mode of the wireless terminal to a message mode. After selection of a message creation, if a message content to be transmitted is created and then message transmission is selected in step 202, the controller 110 detects the selection of the message transmission in step 203 and performs the message transmission in step 204. Herein, if the closing operation of the wireless terminal is performed, the controller 110 detects the performance of the closing operation in step 205 and determines if the message transmission being performed in step 204 has been completed.

If the message transmission has not been completed, the controller 110 detects the incompletion of the message transmission and determines if message transmission maintenance has been set in a state where the closing operation of the wireless terminal has been performed, in step 206. A user can preset the setup of the message transmission maintenance in a state, where the closing operation of the wireless terminal has been performed. Herein, if the message transmission maintenance is set, the message transmission ends only when an end key operates. However, if the message transmission maintenance is not set, the message transmission ends when the closing operation of the wireless terminal is performed or an end key operates.

If the message transmission maintenance has not been set in a state where the closing operation of the wireless terminal has been performed, in step 207 the controller 110 detects that the message transmission maintenance has not been set and in step 208 terminates the message transmission. However, if the message transmission maintenance has been set in a state where the closing operation of the wireless terminal has been performed, the controller 110 detects that the message transmission maintenance has been set in step 207 and controls the message transmission to be continued even when the closing operation of the wireless terminal has been performed in step 210.

If the message transmission is completed in step 210, the controller 110 detects the completion of the message transmission in step 211 and reports the outcome (i.e. success or failure) of the message transmission in step 212.

In step 212, the controller 110 checks a method for reporting if a message selected by a user has been successfully transmitted according to the setup of the message transmission maintenance in a state where the closing operation of the wireless terminal has been performed, and controls the outcome (i.e., success or failure) of the message transmission to be reported.

The outcome (i.e., success or failure) of the message transmission can be reported by changing the number of vibrations, changing the type of ringing sound, changing the operation of a lamp, or using combination of the vibration/the ringing sound/the lamp, according to whether the message transmission has been successful or has failed. For example, when the message transmission has been successful, the vibration occurs one time. However, when the message transmission has failed, the vibration occurs twice. Consequently, whether the folder of the wireless terminal has been closed, the flip of the wireless terminal has been closed or the slide of the wireless terminal has been closed, it is possible to report the outcome of the message transmission.

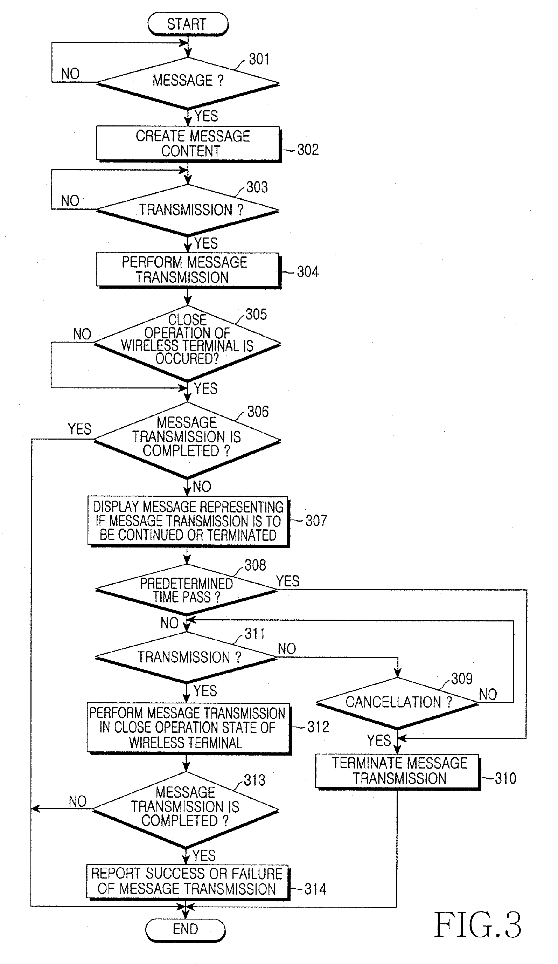

FIG. 3 is a flow diagram illustrating a message transmission process in the wireless terminal according to a second embodiment of the present invention. That is, FIG. 3 illustrates the message transmission process in the wireless terminal equipped with an internal display unit and an external display unit.

Hereinafter, the embodiment of the present invention will be described in detail with reference to FIG. 1.

Referring to FIG. 3, if a message is selected in the wireless terminal, the controller 110 detects the selection of the message in step 301 and switches the mode of the wireless terminal to a message mode. After a message creation is selected, if a message content to be transmitted is created and then message transmission is selected in step 302, the controller 110 detects the selection of the message transmission in step 303 and performs the message transmission in step 304. Herein, if the closing operation of the wireless terminal is performed, the controller 110 detects the performance of the closing operation in step 305 and determines if the message transmission being performed in step 304 has been completed.

If the message transmission has not been completed, the controller 110 detects the incompletion of the message transmission in step 306 and controls a message, which represents whether the message transmission is to be continued or terminated, to be displayed on the external display unit of the wireless terminal in step 307.

After the message is displayed in step 307, if predetermined time passes, the controller 110 detects the passage of the predetermined time in step 308 and terminates the message transmission in step 310. Herein, if transmission cancellation is selected before the predetermined time passes, the controller 110 detects the selection of the transmission cancellation in steps 308 and 309, and terminates the message transmission in step 310. The selection of the message transmission cancellation in step 309 can also be accomplished through input of a key provided in the outer side of the wireless terminal.

However, if the message transmission is selected before the predetermined time passes in response to the display of the message, the controller 110 detects the selection of the message transmission in steps 308 and 311, and controls the message transmission to be continued even when the closing operation of the wireless terminal has been performed in step 312. In step 311, the selection of the message transmission may also be accomplished through input of a key provided in the outer side of the wireless terminal.

In step 312, if the message transmission is completed, in step 313 the controller 110 detects the completion of the message transmission and in step 314 reports the outcome (i.e., success or failure) of the message transmission.

In step 314, the controller 110 checks a method for reporting if a message selected by a user has been successfully transmitted according to the setup of the message transmission maintenance in a state in which the closing operation of the wireless terminal has been performed, and controls the outcome of the message transmission to be reported. The outcome of the message transmission may be reported by changing the number of vibrations, changing the type of ringing sound, changing the operation of a lamp, or using combination of the vibration/the ringing sound/the lamp, according to whether the message transmission has been successful or has failed.

According to the present invention as described above, message transmission is continued even when the closing operation of the wireless terminal has been performed before the message transmission is completed, so that the message transmission can be completed even when the closing operation of the wireless terminal has been performed by mistake during the message transmission. Further, it is possible to reduce waiting time for which the user of the wireless terminal must wait until the message transmission is completed. Furthermore, after the message transmission, the outcome of the message transmission is reported, so that it is not necessary to check the outcome of the message transmission after waiting for the completion of the message transmission.

Although preferred embodiments of the present invention has been described for illustrative purposes, those skilled in the art will appreciate that various modifications, additions and substitutions are possible, without departing from the scope of the invention as disclosed in the accompanying claims.

## Claims

1. A method for transmitting a message in a wireless terminal, the method comprising the steps of:
if transmission of a message created in a message mode of the wireless terminal is selected, performing the message transmission; and
if a closing operation of the wireless terminal is performed during the message transmission, continuing the message transmission in a state where the wireless terminal has been closed.

2. The method as claimed in claim 1, wherein continuing the message transmission further comprises:
if the closing operation of the wireless terminal is performed during the message transmission, determining whether the message transmission has been completed;
if the message transmission has not been completed, determining whether message transmission maintenance has been set in the state where the wireless terminal has been closed; and
if the message transmission maintenance has been set, continuing the message transmission in the state where the wireless terminal has been closed.

3. The method as claimed in claim 2, further comprising, if the message transmission maintenance has not been set, terminating the message transmission.

4. The method as claimed in claim 1, wherein continuing the message transmission further comprises:
if the closing operation of the wireless terminal is performed during the message transmission, determining if the message transmission has been completed;
if the message transmission has not been completed, displaying a message representing whether the message transmission is to be continued or terminated; and
if the message transmission is selected before a predetermined time passes, continuing the message transmission in the state where the wireless terminal has been closed.

5. The method as claimed in claim 4, further comprising, if transmission cancellation of the message is selected before the predetermined time passes or after the predetermined time passes, terminating the message transmission.

6. The method as claimed in claim 4, wherein the message indicating whether the message transmission is to be continued or terminated is displayed on an external display unit of the wireless terminal.

7. The method as claimed in one of claims 1 to 6, further comprising, if the message transmission has been completed, reporting an outcome of the message transmission in the state where the wireless terminal has been closed.

8. The method as claimed in claim 7, wherein the outcome of the message transmission is reported through one of a number of vibrations, a type of ringing sound, and an operation of a lamp.

9. A method for transmitting a message in a wireless terminal, the method comprising the steps of:
if transmission of a message created in a message mode of the wireless terminal is selected, performing the message transmission;
if a closing operation of the wireless terminal is performed during the message transmission, determining if message transmission maintenance has been set in a state where the wireless terminal has been closed;
if the message transmission maintenance has been set, continuing the message transmission in the state where the wireless terminal has been closed; and
if the message transmission is completed, reporting success or failure of the message transmission in the state where the wireless terminal has been closed.

10. The method as claimed in claim 9, further comprising, if the message transmission maintenance has not been set, terminating the message transmission.

11. A method for transmitting a message in a wireless terminal, the method comprising the steps of:
if transmission of a message created in a message mode of the wireless terminal is selected, performing the message transmission;
if a closing operation of the wireless terminal is performed during the message transmission, displaying a message representing whether the message transmission is to be continued or terminated;
if the message transmission is selected before a predetermined time passes, continuing the message transmission in a state where the wireless terminal has been closed; and
if the message transmission is completed, reporting success or failure of the message transmission in the state where the wireless terminal has been closed.

12. The method as claimed in claim 11, further comprising, if transmission cancellation of the message is selected before the predetermined time passes or after the predetermined time passes, terminating the message transmission.

13. The method as claimed in claim 11 or 12, wherein the message representing whether the message transmission is to be continued or terminated is displayed on an external display unit of the wireless terminal.

14. A wireless terminal comprising means for carrying out the steps of the method according to one of claims 1 to 13.
